# FASCICULE DE BREVET EUROPEEN

(11) **EP 3 469 244 B1**
(45) Date de publication et mention de la délivrance du brevet: **15.04.2020**
(21) Numéro de dépôt: 17729133.3
(22) Date de dépôt: 12.06.2017
(51) Int. Cl.: F16L 33/01

(54) **EMBOUT DE CONNEXION DE LIGNE FLEXIBLE, LIGNE FLEXIBLE ET PROCÉDÉ ASSOCIÉS**
VERBINDUNGSENDSTÜCK FÜR EINE FLEXIBLE LEITUNG UND ZUGEHÖRIGE FLEXIBLE LEITUNG UND VERFAHREN
CONNECTION END PIECE FOR A FLEXIBLE LINE, AND ASSOCIATED FLEXIBLE LINE AND METHOD

(30) Priorité: 13.06.2016 FR 1655449
(43) Date de publication de la demande: 17.04.2019
(73) Titulaire: Technip France, 92400 Courbevoie (FR)
(72) Inventeur: GALLOYER, Benoît, 76000 Rouen (FR); BOURGET, Jean-Christophe, 76230 Bois Guillaume (FR)
(74) Mandataire: Lavoix
(86) Numéro de dépôt international: PCT/EP2017/064309
(87) Numéro de publication internationale: WO 2017/216115

(56) Documents cités:
- EP-A1- 3 018 395
- FR-A1- 3 000 170
- FR-A1- 3 003 003
- FR-A1- 3 007 494
- FR-A1- 3 008 161

## Description

La présente invention concerne un embout de connexion de ligne flexible selon le préambule de la revendication 1.

La ligne flexible est avantageusement une conduite flexible de type non liée (« unbonded » en anglais) destinée au transport d'hydrocarbures à travers une étendue d'eau, tel qu'un océan, une mer, un lac ou une rivière. En variante, la ligne flexible est un ombilical renforcé par des éléments d'armure ou encore un câble.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes, lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Certaines de ces conduites sont utilisées dans des conditions très sévères. Ainsi, les hydrocarbures transportés peuvent présenter une pression et une température très élevées, par exemple une pression comprise entre 500 bars et 1500 bars, et une température comprise entre 110°C et 130°C. De plus, dans le cas où la conduite est immergée à grande profondeur, celle-ci doit être capable de résister à une pression externe très élevée, par exemple de l'ordre de 250 bars si la conduite est immergée à 2500 mètres de profondeur.

Les conduites destinées aux grandes profondeurs doivent aussi résister aux très fortes tensions, couramment plusieurs dizaines de tonnes, auxquelles elles sont soumises en service et/ou lors de leur installation en mer.

En outre, dans le cas où l'ensemble de surface est flottant et mobile en fonction des conditions de mer, les conduites montantes (« risers » en anglais) reliant le fond marin à l'ensemble de surface peuvent parfois être soumises à des millions de cycles de variation de courbure. Ces conduites montantes doivent donc aussi être capables de résister durablement à des sollicitations dynamiques en fatigue.

Les embouts de connexion, qui sont particulièrement sollicités, doivent eux aussi être conçus pour résister à de telles conditions de service.

En particulier, l'ancrage des armures de traction dans l'embout est un point important pour obtenir une bonne tenue mécanique, notamment lors de sollicitations dynamiques.

Généralement, les tronçons d'extrémité des fils d'armures sont noyés dans un bloc de résine coulé dans la chambre de réception de l'embout, délimitée par la voûte d'extrémité et le capot. Les frottements entre les éléments d'armure et la résine contribuent à ancrer les éléments d'armure dans l'embout.

En outre, les tronçons d'extrémité des éléments d'armure présentent une trajectoire en hélice. Cette trajectoire en hélice engendre un effet cabestan qui participe également à la retenue des éléments d'armure dans l'embout.

Dans certains cas, des crochets ou d'autres éléments d'ancrage sont formés à l'extrémité de chaque élément d'armure. Ces éléments d'ancrage sont noyés dans la résine. Ceci engendre un blocage mécanique qui s'oppose à la tension s'exerçant sur les éléments d'armure.

Généralement, le capot permettant de fermer la chambre de réception dans l'embout présente une région convergente de l'avant vers l'arrière qui définit dans le bloc de résine solidifiée une région sensiblement tronconique.

À l'arrière de cette région convergente, pour permettre l'engagement du capot autour de la gaine externe et le montage de l'ensemble arrière d'étanchéité autour de la gaine externe, le capot présente une région cylindrique. La transition entre la région tronconique et la région cylindrique est susceptible de constituer une zone fragile dans le bloc de résine, dans laquelle des contraintes importantes peuvent s'appliquer. Ces contraintes peuvent provoquer dans certains cas la rupture du bloc de résine.

WO 2007/144553 décrit un embout du type précité, dans lequel une canule est placée au contact des éléments d'armure à l'avant de l'ensemble arrière d'étanchéité. La canule crée également des discontinuités importantes dans le bloc de résine qui affaiblissent sa structure et sont susceptibles de provoquer sa rupture lorsque la conduite est soumise à des contraintes dynamiques répétées.

En outre, le bloc de résine s'appuie directement à l'arrière sur l'ensemble arrière d'étanchéité, ce qui peut affaiblir la résistance de l'embout.

Un autre exemple d'embout de conduite flexible est décrit dans le document FR 3 007 494 A1, qui décrit également un procédé de montage de cet embout sur la conduite flexible.

Un but de l'invention est d'obtenir un embout qui assure une fixation très robuste des tronçons d'extrémité des éléments d'armure, notamment lorsque la conduite est soumise à des contraintes dynamiques.

À cet effet, l'invention a pour objet un embout selon la revendication 1.L'embout selon l'invention peut comprendre l'une ou plusieurs des caractéristiques des revendications 2 à 13, prise(s) isolément ou suivant toute combinaison techniquement possible.

L'invention a aussi pour objet une conduite selon la revendication 14.

L'invention a également pour objet un procédé de montage d'un embout selon la revendication 15.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon central d'une première conduite flexible selon l'invention ;
- la figure 2 est une vue partielle schématique en coupe d'un premier embout de conduite flexible selon l'invention ;
- la figure 3 est une vue analogue à la figure 2 d'un deuxième embout de conduite flexible selon l'invention ;
- la figure 4 est une vue analogue à la figure 2 d'un troisième embout de conduite flexible selon l'invention ;
- la figure 5 est une vue analogue à la figure 2 d'un quatrième embout de conduite flexible selon l'invention ;
- la figure 6 est une vue analogue à la figure 2 d'un cinquième embout de conduite flexible selon l'invention ;
- la figure 7 est une vue analogue à la figure 2 d'un sixième embout de conduite flexible selon l'invention.

Dans tout ce qui suit, les termes « avant » et « arrière » s'entendent par rapport à la position du milieu d'un tronçon de ligne flexible.

Le terme « arrière » s'entend comme plus proche du milieu du tronçon de la ligne flexible, et plus éloigné d'une extrémité du tronçon de la ligne flexible alors que le terme « avant » s'entend comme plus éloigné du milieu du tronçon de la ligne flexible et comme plus proche d'une extrémité de la ligne flexible.

Les termes « extérieur » / « externe » et « intérieur » / « interne » s'entendent respectivement comme plus éloigné radialement de l'axe de la ligne flexible et comme plus proche radialement de l'axe de la ligne flexible.

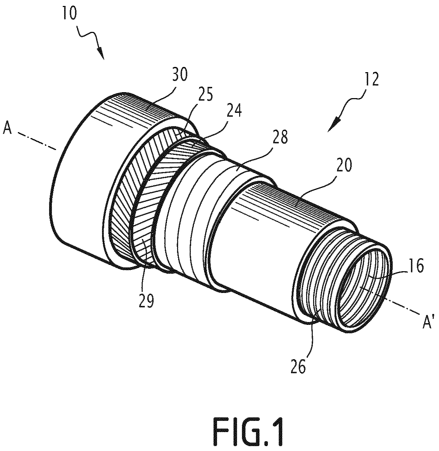

Une première ligne flexible selon l'invention, constituant une conduite flexible 10, est illustrée partiellement par la figure 1.

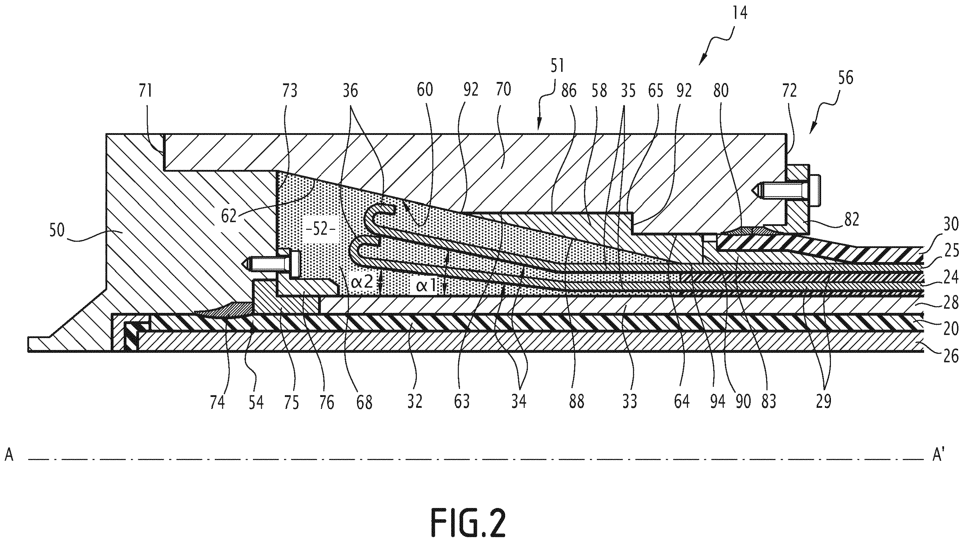

La conduite flexible 10 comporte un tronçon central 12 illustré en partie sur la figure 1. Elle comporte, à chacune des extrémités axiales du tronçon central 12, un embout d'extrémité 14 (non visible sur la figure 1) dont les parties pertinentes sont représentées sur la figure 2.

En référence à la figure 1, la conduite flexible 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible 10 sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite flexible 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine tubulaire 20 à base de matériau polymère, constituant avantageusement une gaine de pression.

La conduite 10 comporte en outre au moins une couche d'armures de traction 24, 25 disposée extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La gaine de pression 20 comporte une partie d'extrémité 32 disposée dans l'embout 14.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

Elle présente une région d'extrémité 33 disposée dans l'embout 14.

La conduite flexible 10 selon l'invention comprend au moins une couche d'armures 24, 25 formée d'un enroulement hélicoïdal d'au moins un élément d'armure 29 allongé.

Dans l'exemple représenté sur la figure 1, la conduite flexible 10 comporte une pluralité de couches d'armures 24, 25, notamment une couche d'armures intérieure 24, appliquée sur la voûte de pression 28 (ou sur la gaine 20 lorsque la voûte 28 est absente) et une couche d'armures extérieure 25 autour de laquelle est disposée la gaine extérieure 30.

Chaque couche d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier, ou par des rubans en matériau composite, par exemple des rubans renforcés de fibres de carbone. Dans les exemples représentés sur les figures 2 à 5, les éléments d'armure 29 sont formés par des fils métalliques.

Comme on le verra plus bas, les éléments d'armure 29 présentent chacun un tronçon d'extrémité 34 introduit dans l'embout 14. Le tronçon d'extrémité 34 s'étend jusqu'à une extrémité libre 36 disposée dans l'embout 14. Il présente avantageusement une trajectoire pseudo-hélicoïdale d'axe A-A' dans l'embout 14, l'hélice s'enroulant sur une enveloppe conique.

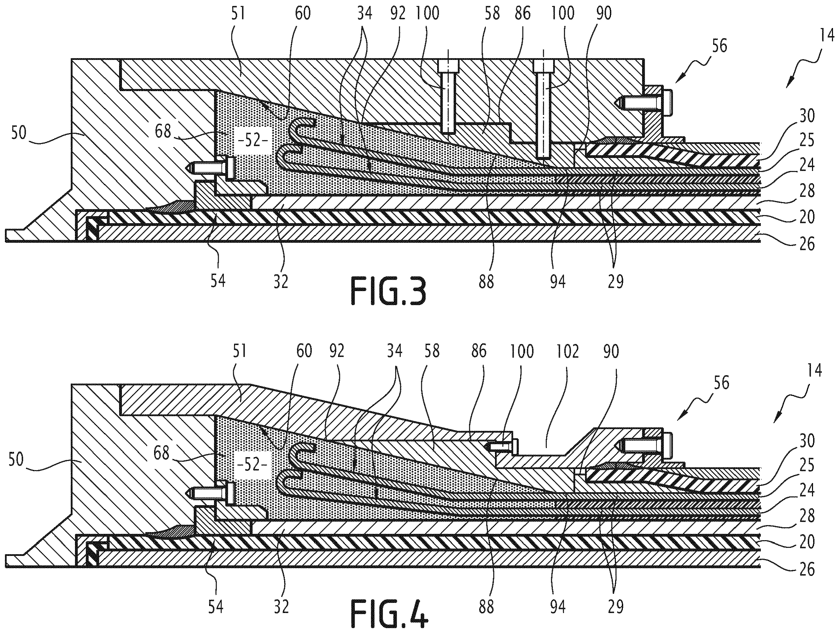

Dans l'exemple représenté sur les figures 2 et 3, pour chaque couche d'armures 24, 25, les tronçons d'extrémité 34 des éléments d'armure 29 s'étendent de manière divergente à l'écart de l'axe A-A', depuis un point de décollement arrière 35 vers l'extrémité libre 36.

Les tronçons d'extrémité 34 des éléments d'armure 29 délimitent ainsi une enveloppe de forme sensiblement tronconique d'axe A-A' s'ouvrant vers l'avant. Ils forment ainsi une tulipe d'extrémité.

Comme illustre sur la figure 2, l'angle α1 d'ouverture des tronçons d'extrémité 34 des éléments d'armure 29 de la couche d'armures extérieure 25 est supérieur à l'angle α2 d'ouverture des tronçons d'extrémité 34 des éléments d'armure 29 de la couche d'armures intérieure 24.

En outre, pour chaque couche d'armures 24, 25, les tronçons d'extrémité 34 sont écartés latéralement les uns des autres. En particulier, les bords latéraux de chaque paire de tronçons d'extrémité 34 en regard délimitent entre eux des interstices circonférentiels.

Dans cet exemple, les interstices circonférentiels s'étendent entre les points de décollement arrière 35 et les extrémités avant libres 36. Ils présentent une largeur circonférentielle qui augmente depuis l'arrière vers l'avant.

Avantageusement, et comme on le verra plus bas, les tronçons d'extrémité 34 sont disposés lors de la fabrication de l'embout 10 pour présenter leur conformation la plus proche possible de leur conformation naturelle, dans laquelle ils sont le moins contraints. Cette conformation est obtenue en laissant les tronçons d'extrémité 34 de chaque couche 24, 25 se relâcher librement, ce qui leur permet d'adopter une configuration divergente, en forme de tulipe.

Avantageusement, l'extrémité libre 36 de chaque tronçon d'extrémité 34 est conformée pour présenter une région d'ancrage, par exemple en forme de crochet ou de vague.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Comme illustré par la figure 2, outre la partie d'extrémité 32 de la gaine 20 et les tronçons d'extrémité 34 des éléments d'armure 29, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 34 des éléments d'armure 29.

L'embout 14 comporte en outre un ensemble avant 54 d'étanchéité autour de la gaine tubulaire 20, représenté schématiquement sur la figure 2, et un ensemble arrière 56 d'étanchéité autour de la gaine extérieure 30.

Selon l'invention, l'embout 14 comporte en outre un insert 58 disposé dans la chambre de réception 52 au contact d'une surface interne 60 du capot 51.

L'embout 14 comprend de plus un matériau de remplissage 68 solide disposé dans la chambre 52 pour noyer les tronçons d'extrémité 34 des éléments d'armure 29.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité (non représentée).

La voûte d'extrémité 50 présente un alésage central destiné à recevoir l'extrémité de la gaine de pression 20 et à permettre l'écoulement du fluide circulant à travers le passage central 16 vers l'extérieur de la conduite 10.

Le capot 51 comporte une paroi périphérique 70 s'étendant autour de l'axe A-A'. La paroi périphérique 70 présente un bord avant 71 fixé sur la voûte d'extrémité 50, à l'écart radialement des couches d'armures 24, 25 et un bord arrière 72 s'étendant axialement vers l'arrière au-delà de la voûte d'extrémité 50.

La surface interne 60 du capot 51 délimite la chambre de réception 52 radialement vers l'extérieur. Une face arrière 73 de la voûte d'extrémité 50 délimite transversalement la chambre 52 vers l'avant.

Dans la chambre de réception 52, la surface interne 60 du capot 51 présente une région avant 62 convergente vers l'axe A-A' de l'avant vers l'arrière. La surface interne 60 du capot 51 présente en outre au moins une région cylindrique d'axe A-A', ici une région intermédiaire cylindrique 63, et une région arrière cylindrique 64 définissant entre elles un épaulement arrière 65 de retenue de l'insert 58.

L'épaulement arrière 65 est annulaire. Il s'étend transversalement par rapport à l'axe A-A', en regard de la face arrière 73 de la voûte d'extrémité 50.

L'ensemble avant d'étanchéité 54 est avantageusement situé à l'avant de l'embout 14, en contact avec la voûte d'extrémité 50. Dans le mode de réalisation de la figure 2, l'ensemble avant d'étanchéité 54 est décalé axialement vers l'avant par rapport aux extrémités libres 36 des éléments d'armure 29.

De manière connue, l'ensemble avant d'étanchéité 54 comporte une bague avant 74 de sertissage, destinée à venir en prise sur la gaine de pression 20, et une bride de sertissage 76. Le serrage de la bride 76 contre la voûte 50 a pour effet de déformer radialement la bague avant 74 de sertissage, de sorte que cette dernière s'insère dans la gaine de pression 20. Dans l'exemple représenté sur la figure 2, dans lequel la conduite 10 comporte une voûte de pression 28, l'ensemble avant 54 comporte en outre une bague intermédiaire d'arrêt 75 de la voûte de pression 28. La bague intermédiaire d'arrêt 75 est interposée entre la bague avant 74 de sertissage et la bride de sertissage 76.

L'ensemble arrière d'étanchéité 56 est disposé à l'arrière de la chambre 52.

Il comporte au moins une bague arrière de sertissage 80 sertissant la gaine externe 30, et une bride arrière 82 de sertissage serrage de la bague arrière 80, fixée sur le capot 51, avantageusement au niveau du bord arrière 72 de la paroi périphérique 70.

L'ensemble arrière d'étanchéité 56 comporte éventuellement une canule 83, située axialement en regard de la bague arrière 80, l'extrémité de la gaine externe 30 étant interposée radialement entre la bague arrière 80 de sertissage et la canule 83.

L'insert 58 est ici formé par une bague, s'étendant autour de l'axe A-A'. Il comporte une surface extérieure 86 calée sur la surface interne 60 du capot 51, une surface intérieure 88 convergente vers l'axe longitudinal A-A' d'avant en arrière, et une surface arrière 90 transversale.

La surface extérieure 86 de l'insert 58 présente une forme sensiblement conjuguée à la forme de la surface interne 60 du capot 51 dans la région intermédiaire 63 et dans la région arrière 64.

Elle définit une marche 92 appliquée sur l'épaulement 65 pour bloquer axialement l'insert 58 vers l'arrière dans le capot 51.

La surface intérieure convergente 88 est avantageusement tronconique d'axe A-A'. Elle s'étend entre un bord avant 92, disposé au contact de la surface intérieure 60, à l'écart des tronçons d'extrémité 34 des éléments d'armure 29 et un bord arrière 94 disposé au voisinage des tronçons d'extrémité 34 des éléments d'armure 29.

Dans l'exemple représenté sur la figure 2, le bord avant 92 est situé à l'intersection entre la surface extérieure 86 et la surface intérieure 88 de l'insert qui convergent l'une vers l'autre au niveau du bord avant 92. La surface intérieure 88 de l'insert 58 affleure ici la surface interne 60 du capot 51, en prolongeant vers l'arrière la région avant 60 de la surface interne 60, dans la continuité de la surface interne 60.

L'insert 58 et le capot 51 définissent donc une face convergente d'appui continu pour le bloc de matériau de remplissage 68 qui s'étend sur sensiblement la totalité de la longueur de la chambre 52.

La surface intérieure 88 est située à l'écart des tronçons d'extrémité 34 des éléments d'armure 29 sur la majorité de la longueur de la surface intérieure 88, prise entre le bord arrière 94 et le bord avant 92, avantageusement sur plus de 50 % de cette longueur, prise parallèlement à l'axe A-A' de préférence sur plus de 80 % de cette longueur, prise parallèlement à l'axe A-A'.

La surface intérieure 88 est située à l'écart des tronçons d'extrémité 34 des éléments d'armure 29 sur plus de 20% de la longueur des éléments d'armure 29 en regard de la surface intérieure 88, prise le long de l'axe A-A'. Avantageusement, la surface intérieure 88 est située à l'écart des tronçons d'extrémité 34 des éléments d'armure 29 sur plus de 50% de la longueur des éléments d'armure 29 en regard de la surface intérieure 88, prise le long de l'axe A-A'.

Au niveau du bord arrière 94, la surface intérieure 88 de l'insert 58 est située au contact des tronçons d'extrémité 34 des éléments d'armure 29 ou à une distance radiale inférieure à 5 mm, notamment comprise entre 1 mm et 4 mm, préférentiellement comprise entre 2 mm et 3 mm, des tronçons d'extrémité 34 des éléments d'armure 29.

Dans cet exemple, l'insert 58 est disposé axialement le long de l'axe A-A' entre l'ensemble avant d'étanchéité 54 et l'ensemble arrière d'étanchéité 56. Ainsi, le bord arrière 94 est disposé à l'avant de l'ensemble arrière d'étanchéité 56. Le bord avant 92 est situé à l'arrière de l'ensemble arrière d'étanchéité 56.

L'insert 58 fait saillie radialement vers l'axe A-A' au-delà du capot 51. Il s'étend ainsi radialement sur toute l'étendue radiale de l'ensemble arrière d'étanchéité 56, en particulier au niveau de la surface arrière 90.

De préférence, pour faciliter le montage de l'embout 14, l'insert 58 est formé d'une pluralité de segments circonférentiels, par exemple d'au moins deux segments circonférentiels d'étendue angulaire inférieure à 360°, assemblés les uns avec les autres pour former une bague.

Le matériau de remplissage solide 68, est par exemple obtenu par durcissement d'une résine polymérique thermodurcissable, notamment de type epoxy. Il est disposé dans la chambre de réception 52 au contact des tronçons d'extrémité 34 des éléments d'armure 29.

Le matériau de remplissage 68 remplit sensiblement totalement la chambre de réception 52 entre la face arrière 73 de la voûte d'extrémité 50, la région avant 62 de la surface interne 60 et la surface intérieure 88 de l'insert 58.

Il est de préférence injecté de manière fluide dans la chambre 52 et se solidifie dans celle-ci, en liant les tronçons d'extrémité 34 des éléments d'armure 29 à la voûte 50 et/ou au capot 51.

Comme indiqué plus haut, le matériau de remplissage 68 remplit les interstices circonférentiels entre les tronçons d'extrémité adjacents 34 des éléments d'armure 29 de chaque couche d'armures 24, 25.

Le matériau de remplissage 68 forme ainsi un bloc solide continu, présentant une face périphérique extérieure convergeant d'avant en arrière vers l'axe A-A', de forme complémentaire à la face convergente définie par le capot 51 et par l'insert 58.

Les tronçons d'extrémité 34 des éléments d'armure 29 étant noyés dans le bloc de matériau de remplissage 68, un meilleur serrage radial des éléments d'armure 29 est assuré par la coopération entre le bloc de matériau de remplissage 68, le capot 51 et l'insert 58, par effet de coin.

Ceci transmet efficacement les efforts appliqués sur le bloc de matériau de remplissage 68 par les éléments d'armures 29 vers le capot 51, plutôt que vers l'ensemble arrière d'étanchéité 56.

De plus, dans le cas où l'embout 14 est maintenu durablement à une température élevée lorsque la conduite flexible 10 est en service, par exemple à une température de l'ordre de 130°C, l'insert 58 réduit le phénomène de fluage du matériau de remplissage 68 vers l'arrière de l'embout 14, et donc améliore l'efficacité et la durabilité de l'ancrage des couches d'armures 24, 25. Cette réduction du phénomène de fluage vers l'arrière du matériau de remplissage 58 est améliorée lorsque la face intérieure 88 de l'insert 58 est située au contact ou très près des tronçons d'extrémité 34 des éléments d'armure 29, par exemple à une distance radiale inférieure à 3 mm.

Le volume de matériau de remplissage 68 inséré dans la chambre 52 est en outre réduit par la présence de l'insert 58. Ceci facilite la maîtrise des pressions de serrage intrinsèques au matériau de remplissage 68 lors de sa polymérisation.

La face délimitant la chambre de réception 52 vers l'extérieur à l'écart de l'axe A-A' étant continûment convergente vers l'arrière, les risques de casse du bloc de matériau de remplissage 68 sont très limités. Ainsi, le mouvement de va et vient axial des éléments d'armure 29 dans le matériau de remplissage 68 est limité, voire supprimé. Ceci garantit une immobilisation efficace des tronçons d'extrémité 34 et évite la détérioration en fatigue des éléments d'armure 29.

Les éléments d'armure 29 sont donc ancrés de manière particulièrement robuste, en particulier pour des utilisations avec des fortes pressions et des températures élevées.

Le montage de l'embout 14 va maintenant être décrit.

Initialement, un tronçon 12 de conduite flexible 10 est fourni. Le capot 51 dépourvu d'insert 58 est engagé autour de la gaine externe 30 à l'extrémité du tronçon 12 et est reculé vers l'arrière. La région arrière 64 de la surface interne 60 étant cylindrique, cette insertion est facilitée.

La gaine externe 30 est alors dénudée partiellement à l'extrémité de la conduite flexible 10 pour faire apparaître les tronçons d'extrémité 34 des éléments d'armure 29, la partie d'extrémité 32 de la voûte 28, et la région d'extrémité 33 de la gaine de pression 20.

Puis, la canule 83 de l'ensemble arrière d'étanchéité 56 est insérée entre les couches d'armures 24, 25 et la gaine externe 30. Ensuite, les tronçons d'extrémité 34 sont déployés radialement à l'écart de l'axe A-A' en s'écartant d'arrière en avant de l'axe A-A', jusqu'aux extrémités libres 36.

Les différentes pièces constituant l'ensemble avant d'étanchéité 54 sont mises en place autour de l'extrémité de la gaine de pression 20. La voûte d'extrémité 50 est alors engagée à l'extrémité de la gaine 20 et l'ensemble avant d'étanchéité 54 est assemblé sur la voûte d'extrémité 50 pour réaliser l'étanchéité autour de la gaine 20.

Ensuite, selon le mode préféré de réalisation, l'insert 58 qui est formé d'une pluralité de segments circonférentiels assemblés les uns aux autres pour former une bague, par exemple deux segments d'étendue angulaire égale à 180° ou trois segments d'étendue angulaire égale à 120°, est monté autour des tronçons d'extrémité 34 des éléments d'armure 29 de préférence, à l'arrière de leurs points de décollement 35 à l'écart de l'axe A-A'. Alternativement, selon une variante utilisant un insert 58 formé d'une seule pièce non démontable, l'insert 58 est mis en place après l'étape d'installation de la canule 83 et avant l'étape de déploiement des tronçons d'extrémité 34.

Le capot 51 est alors avancé pour placer le bord avant 71 au contact de la voûte d'extrémité 50 et fermer la chambre de réception 52. Lors de ce déplacement, la surface extérieure 86 de l'insert 58 se cale sur la surface interne 60 du capot 51 en appui sur la région intermédiaire 63, l'épaulement 65, et la région arrière 64.

L'ensemble arrière d'étanchéité 56 est alors mis en place pour réaliser l'étanchéité autour de la gaine externe 30.

Puis, le matériau de remplissage 68 est injecté dans la chambre de réception 52 sous forme fluide. Il remplit la chambre de réception 52 et s'insère au contact de la région avant 60 du capot 51 et de la surface intérieure 88 de l'insert 58, en s'interposant entre les tronçons d'extrémité 34 des éléments d'armure 29 et la surface interne 88.

Le matériau de remplissage 68 durcit et forme alors un bloc dans lequel sont noyés les tronçons d'extrémité 34. Le bloc de matériau de remplissage 68 coopère avec les faces convergentes dans la région avant 62 et le long de la surface intérieure 88, pour assurer une retenue très efficace des éléments d'armure 34.

Dans la variante représentée sur la figure 3, l'embout 10 comprend au moins un élément 100 de fixation axiale de l'insert sur le capot 51. Chaque élément de fixation 100 est formé par une vis s'étendant radialement depuis la surface externe du capot 51 à travers le capot 51 jusqu'à l'insert 58.

Dans la variante représentée sur la figure 4, la surface externe du capot 51 définit un renfoncement 102 situé en regard de l'épaulement 65. L'élément de fixation 100 s'étend alors axialement, parallèlement à l'axe A-A', depuis le renfoncement 102 à travers l'épaulement 65 jusqu'à l'insert 58.

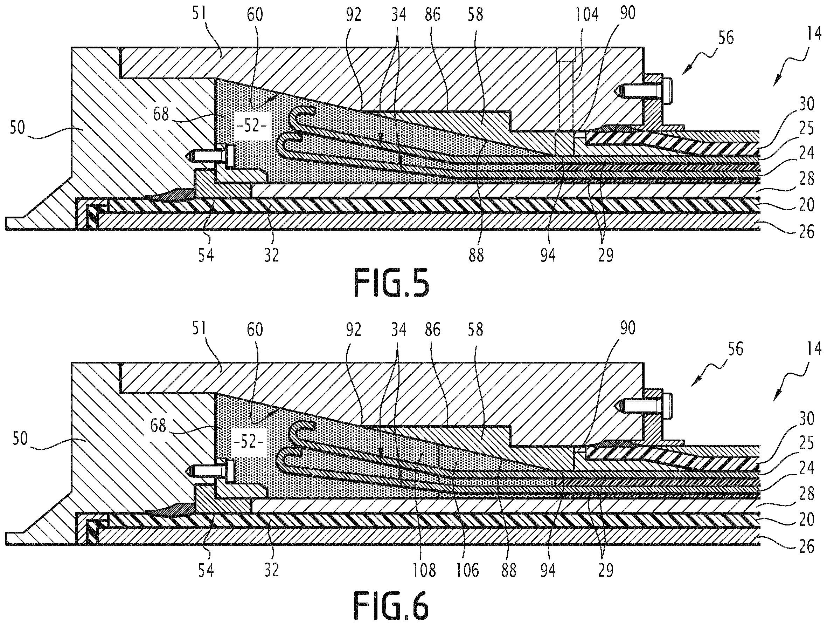

Dans la variante illustrée par la figure 5, l'insert 58 est juste enfilé et est disposé en appui sur la surface interne 60 du capot 51. Un passage est ménagé à travers l'insert 58 pour permettre au matériau de remplissage 68 sous forme fluide de s'évacuer par un évent 104 ménagé radialement à travers le capot 51 en regard du bord arrière 94.

Dans une autre variante, illustrée par la figure 6, le matériau de remplissage solidifié 68 comporte un bloc arrière 106 s'étendant vers l'avant à partir du bord arrière 94 de la surface intérieure 88 de l'insert et un bloc avant 108, s'étendant à partir du bloc arrière 106 jusqu'à la face arrière 73 de la voûte d'extrémité 50

Le bloc arrière 106 et le bloc avant 108 sont constitués de compositions de matériaux distincts. Par exemple, le bloc arrière 106 est formé d'un autre polymère que le bloc avant 108, par exemple du polyuréthane.

Avantageusement, le bloc arrière 106 présente un module élastique inférieur à celui du bloc avant 108. Le bloc arrière 106 est par exemple formé d'une résine plus souple que la résine formant le bloc avant 108.

Ainsi, une meilleure sollicitation du matériau de remplissage 68 solidifié est assurée dans l'embout 14, notamment en cisaillement, ce qui limite le glissement des éléments d'armure 29 soumis à une force de tension. En outre cette variante permet d'assurer une transition progressive de la raideur en flexion entre d'une part la longueur courante de la conduite flexible 10 qui est une zone de faible raideur en flexion, et d'autre part la zone avant de l'embout 14 qui est une zone de très grande raideur en flexion. Ceci a pour effet de réduire les contraintes mécaniques dans les éléments d'armure 29 au niveau de la partie arrière de l'embout 14 dans le cas où la conduite flexible 10 est fléchie à proximité immédiate de l'embout 14.

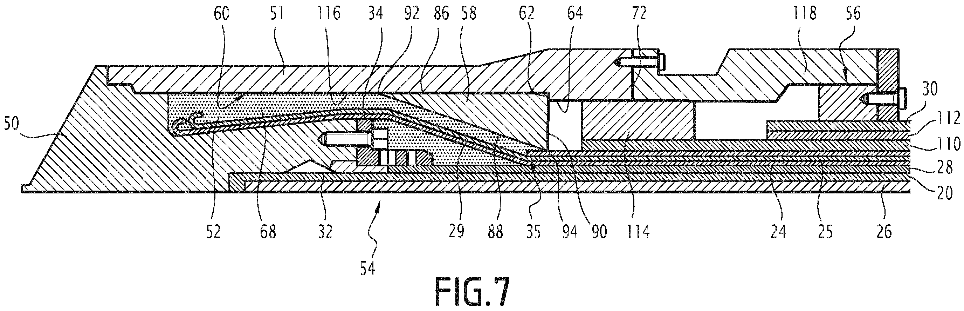

Dans la variante illustrée par la figure 7, la conduite flexible 10 comporte une gaine intermédiaire 110 disposée autour des couches d'armures 24, 25, au moins une couche intermédiaire 112 disposée à l'extérieur de la gaine intermédiaire 110, la gaine externe 30 recouvrant la couche intermédiaire 112.

La couche intermédiaire 112 est par exemple une couche d'isolant thermique.

Compte tenu de la présence de la gaine intermédiaire 110, l'embout 14 comporte un ensemble intermédiaire 114 d'étanchéité autour de la gaine intermédiaire 110. L'ensemble intermédiaire d'étanchéité 114 comprend comme précédemment une canule et une bride de sertissage qui sont disposées radialement de part et d'autre de la gaine intermédiaire 110.

Pour permettre l'engagement du capot 51 autour de la gaine externe 30, pour accommoder le passage de la couche intermédiaire 112 et de la gaine additionnelle 110 dans le capot 51, et pour mettre en place l'ensemble intermédiaire d'étanchéité 114, la surface interne 60 du capot 51 est ici dépourvue de région avant convergente.

La surface interne 60 comprend ainsi une région avant 116 cylindrique, située à l'avant de la région arrière 64 et délimitant avec elle l'épaulement 65 de retenue axiale de l'insert 58.

L'insert 58 est calé sur la région avant 116, à l'avant de l'épaulement 62. Il fait saillie radialement vers l'axe A-A' pour que son bord arrière 94 soit disposé au voisinage des tronçons d'extrémité 34 des éléments d'armure 29, comme décrit précédemment.

Comme indiqué plus haut, le bord avant 92 de la surface intérieure 88 de l'insert est disposé au contact de la surface interne 60 du capot 51, dans la région cylindrique 116.

Sa surface arrière 90 s'étend ainsi radialement en regard de l'ensemble intermédiaire d'étanchéité 114, à l'avant de celui-ci.

L'embout 14 comprend en outre un prolongement arrière 118 du capot 51, assemblé sur le bord arrière 72 du capot 51 au niveau de l'ensemble intermédiaire d'étanchéité 114.

Le prolongement arrière 118 entoure l'ensemble intermédiaire 114 à l'avant et entoure l'ensemble arrière d'étanchéité 56 autour de la gaine externe 30 à l'arrière.

La présence de l'insert 58 compense le jeu radial important entre la surface interne 60 du capot 51 et les tronçons d'extrémité 34 des éléments d'armure 29 au niveau de leurs points de décollement 35. Ce jeu est nécessaire pour accommoder radialement la gaine intermédiaire 110, l'ensemble intermédiaire d'étanchéité 114, et la gaine externe 30 lors du montage de l'embout 14.

En outre, l'insert 58 limite la transmission axiale de force entre le bloc de matériau de remplissage 68 et l'ensemble intermédiaire d'étanchéité 116 et favorise un effet de coin au sein du bloc de matériau de remplissage 68.

## Revendications

1. Embout (14) de connexion d'une ligne flexible, la ligne flexible comportant une gaine tubulaire (20) et au moins une couche d'armures (24, 25) disposée autour de la gaine tubulaire (20), l'embout (14) comportant :
- une partie d'extrémité (32) de la gaine tubulaire (20) définissant un axe longitudinal (A-A') de l'embout (14) ;
- une voûte d'extrémité (50) ;
- un capot (51), fixé à la voûte d'extrémité (50), le capot (51) présentant une surface interne (60) disposée en regard de la partie d'extrémité (32) de la gaine tubulaire (20), la surface interne (60) du capot (51), la voûte d'extrémité (50) et la partie d'extrémité (32) de la gaine tubulaire (20) délimitant au moins une chambre de réception (52) ;
- des tronçons d'extrémité (34) d'éléments d'armure (29), placés dans la chambre de réception (52) ;
- un matériau de remplissage (68) solidifié, noyant les tronçons d'extrémité (34) des éléments d'armure (29) dans la chambre de réception (52);
- un insert (58) disposé dans la chambre de réception (52) au contact de la surface interne (60) du capot (51),
**caractérisé en ce que** l'insert (58) délimite une surface intérieure (88) convergente d'avant en arrière vers l'axe longitudinal (A-A'), un bord arrière (94) de la surface intérieure convergente (88) étant localisé au voisinage d'un tronçon d'extrémité (34) d'un élément d'armure (29), un bord avant (92) de la surface intérieure convergente (88) étant en contact avec la surface interne (60) du capot (51), en continuité avec la surface interne (60) du capot (51), la surface intérieure convergente (88) étant située à l'écart de chaque élément d'armure (29) sur au moins une partie de la longueur de l'élément d'armure (29) entre le bord arrière (94) et le bord avant (92) de la surface intérieure convergente (88), le matériau de remplissage solidifié (68) étant au contact de la surface intérieure convergente (88) entre le bord arrière (94) et le bord avant (92) de la surface intérieure convergente (88).

2. Embout (14) selon la revendication 1, dans lequel l'insert (58) présente une surface extérieure (86) de forme conjuguée avec une région arrière (64) de la surface interne (60) du capot (51).

3. Embout (14) selon la revendication 2, dans lequel la région arrière (64) de la surface interne (60) du capot (51) sur lequel s'appuie la surface extérieure (86) de l'insert (58) définit un épaulement (65) de retenue axiale de l'insert (58).

4. Embout (14) selon l'une quelconque des revendications 2 ou 3, dans lequel la région arrière (64) de la surface interne (60) du capot (51) est cylindrique et coaxiale avec l'axe longitudinal (A-A').

5. Embout (14) selon l'une quelconque des revendications précédentes, dans lequel la surface interne (60) du capot (51) présente une région avant (62) située à l'avant de l'insert (58), la région avant (62) étant convergente d'avant en arrière vers l'axe longitudinal (A-A').

6. Embout (14) selon la revendication 5, dans lequel la surface intérieure convergente (88) affleure la surface interne (60) du capot (51) au niveau du bord avant (92) de la surface intérieure convergente (88).

7. Embout (14) selon l'une quelconque des revendications précédentes, comprenant un ensemble arrière (56) d'étanchéité autour d'une gaine externe (30) de la ligne flexible, disposé autour des éléments d'armure (29), le bord arrière (94) de l'insert (58) étant situé à l'avant de l'ensemble arrière d'étanchéité (56).

8. Embout (14) selon la revendication 7, dans lequel l'insert (58) s'étend radialement sur toute l'étendue radiale de l'ensemble arrière d'étanchéité (56), à l'avant de l'ensemble arrière d'étanchéité (56).

9. Embout (14) selon l'une quelconque des revendications précédentes, comprenant un ensemble avant (54) d'étanchéité autour de la gaine tubulaire (20), le bord avant (92) de l'insert (58) étant situé à l'arrière de l'ensemble avant d'étanchéité (50).

10. Embout (14) selon l'une quelconque des revendications précédentes, dans lequel les tronçons d'extrémité (34) des éléments d'armure (29) divergent d'arrière en avant à l'écart de l'axe longitudinal (A-A') jusqu'à leur extrémité libre (36) dans la chambre de réception (52).

11. Embout (14) selon l'une quelconque des revendications précédentes, dans lequel le matériau de remplissage solidifié (68) comporte un bloc arrière (108), formé d'une première composition de matériau, le bloc arrière (108) étant disposé au contact de la surface intérieure convergente (88) de l'insert (58), et un bloc avant (106), formé d'une deuxième composition de matériau, distincte de la première composition de matériau, le bloc avant (106) étant disposé à l'avant du bloc arrière (108).

12. Embout (14) selon l'une quelconque des revendications précédentes, comprenant au moins un élément de fixation (100) de l'insert (58) sur le capot (51), l'élément de fixation (100) s'étendant radialement ou axialement par rapport à l'axe longitudinal (A-A').

13. Embout (14) selon l'une quelconque des revendications 1 à 11, dans lequel l'insert (58) est calé sans être fixé sur la surface interne (60) du capot (51).

14. Ligne flexible, comprenant :
- une gaine tubulaire (20) délimitant au moins un passage de circulation de fluide ;
- au moins une couche d'armures (24, 25) disposée autour de la gaine tubulaire (20),
- au moins un embout (14) selon l'une quelconque des revendications précédentes, monté à une extrémité de la gaine tubulaire (20).

15. Procédé de montage d'un embout (14) de connexion d'une ligne flexible, la ligne flexible comportant une gaine tubulaire (20) délimitant un passage de circulation de fluide et au moins une couche d'armures (24, 25) disposée autour de la gaine tubulaire (20), le procédé comportant les étapes suivantes :
- fourniture d'une partie d'extrémité (32) de la gaine tubulaire (20) définissant un axe longitudinal (A-A') de l'embout (14);
- engagement d'un capot (51), autour de la gaine tubulaire (20), le capot (51) présentant une surface interne (60) disposée en regard de la partie d'extrémité (32) de la gaine tubulaire (20),
- dégagement de tronçons d'extrémité (34) d'éléments d'armure (24, 25) ;
- placement d'une voûte d'extrémité (50) à l'extrémité de la gaine tubulaire (20) et amenée du capot (51) au contact de la voûte d'extrémité (50), la voûte d'extrémité (50), la surface interne (60) du capot (51) et la partie d'extrémité (32) de la gaine tubulaire (20) délimitant au moins une chambre de réception (52) recevant les tronçons d'extrémité (34) des éléments d'armure (29), un insert (58) étant disposé au contact de la surface interne (60) du capot (51) dans la chambre de réception (52) ;
- injection d'un matériau de remplissage propre à se solidifier dans la chambre de réception (52) et solidification du matériau de remplissage (68) ;
**caractérisé en ce que** l'insert (58) délimite une surface intérieure (88) convergente d'avant en arrière vers l'axe longitudinal (A-A'), un bord arrière (94) de la surface intérieure convergente (88) étant localisée au voisinage d'un tronçon d'extrémité (34) d'un élément d'armure (29), un bord avant (92) de la surface intérieure convergente (88) étant en contact avec la surface interne (60) du capot (51), en continuité avec la surface interne (60) du capot (51), la surface intérieure convergente (88) étant située à l'écart de chaque élément d'armure (29) sur au moins une partie de la longueur du de l'élément d'armure (29) entre le bord arrière (94) et le bord avant (92) de la surface intérieure convergente (88),
le matériau de remplissage solidifié (68) étant au contact de la surface intérieure convergente (88) entre le bord arrière (94) et le bord avant (92) de la surface intérieure convergente (88).

## Patentansprüche

1. Verbindungsstutzen (14) einer flexiblen Leitung, wobei die flexible Leitung eine rohrförmige Umhüllung (20) und mindestens eine Bewehrungsschicht (24, 25) aufweist, die um die rohrförmige Umhüllung (20) herum angeordnet ist, wobei der Stutzen (14) aufweist:
- einen Endbereich (32) der rohrförmige Umhüllung (20), der eine Längsachse (A-A') des Stutzens (14) definiert;
- ein Endbogenteil (50);
- eine Abdeckung (51), die an dem Endbogenteil (50) befestigt ist, wobei die Abdeckung (51) eine Innenfläche (60) aufweist, die gegenüber dem Endbereich (32) der rohrförmige Umhüllung (20) angeordnet ist, wobei die Innenfläche (60) der Abdeckung (51), das Endbogenteil (50) und der Endbereich (32) der rohrförmige Umhüllung (20) mindestens eine Aufnahmekammer (52) begrenzen;
- Endabschnitte (34) von Bewehrungselementen (29), die in der Aufnahmekammer (52) angeordnet sind;
- ein verfestigtes Füllmaterial (68), in dem die Endabschnitte (34) der Bewehrungselemente (29) in der Aufnahmekammer (52) eingebettet sind;
- einen Einsatz (58), der in der Aufnahmekammer (52) in Kontakt mit der Innenfläche (60) der Abdeckung (51) angeordnet ist,
**dadurch gekennzeichnet, dass** der Einsatz (58) eine von vorn nach hinten zur Längsachse (A-A') konvergierende Innenfläche begrenzt, wobei der hintere Rand (94) der konvergierenden Innenfläche (88) benachbart zu einem Endabschnitt (34) eines Bewehrungselementes (29) liegt, ein Vorderrand (92) der konvergierenden Innenfläche (88) in Kontakt mit der Innenfläche (60) der Abdeckung (51) fortlaufend zu der Innenfläche (60) der Abdeckung (51) ist, die konvergierende Innenfläche (88) zu jedem Bewehrungselement (29) über mindestens einen Teil der Länge des Bewehrungselementes (29) zwischen dem hinteren Rand (94) und dem vorderen Rand (92) der konvergierenden Innenfläche (88) beabstandet ist, wobei das verfestigte Füllmaterial (68) in Kontakt mit der konvergierenden Innenfläche (88) zwischen dem hinteren Rand (94) und dem vorderen Rand (92) der konvergierenden Innenfläche (88) ist.

2. Stutzen (14) nach Anspruch 1, bei dem der Einsatz (51) eine Außenfläche (86) in konjugierender Form mit einem hinteren Bereich (64) der Innenfläche (60) der Abdeckung (51) aufweist.

3. Stutzen (14) nach Anspruch 2, bei dem der hintere Bereich (64) der Innenfläche (60) der Abdeckung (51), auf der sich die Außenfläche (86) des Einsatzes (58) abstützt, eine Schulter (65) zum axialen Rückhalt des Einsatzes (58) definiert.

4. Stutzen (14) nach einem beliebigen der Ansprüche 2 oder 3, bei dem der hintere Bereich (64) der Innenfläche (60) der Abdeckung (51) zylindrisch und koaxial zu der Längsachse (A-A') ist.

5. Stutzen (14) nach einem beliebigen der vorhergehenden Ansprüche, bei dem die Innenfläche (60) der Abdeckung (51) einen vorderen Bereich (62) aufweist, der vor dem Einsatz (58) liegt, wobei der vordere Bereich (62) von vorn nach hinten zur Längsachse (A-A') konvergierend ist.

6. Stutzen (14) nach Anspruch 5, bei dem die konvergierende Innenfläche (88) bündig an der Innenfläche (60) der Abdeckung (51) an dem vorderen Rand (92) der konvergierenden Innenfläche (88) liegt.

7. Stutzen (14) nach einem beliebigen der vorhergehenden Ansprüche, der eine hintere Dichtungsanordnung (56) um eine externe Umhüllung (30) der flexiblen Leitung herum, die um Bewehrungselemente (29)herum angeordnet ist, umfasst, wobei der hintere Rand (94) des Einsatzes (58) vor der hinteren Dichtungsanordnung (56) liegt.

8. Stutzen (14) nach Anspruch 7, bei dem der Einsatz (58) sich radial über den gesamten Umfang der hinteren Dichtungsanordnung (56) vor der hinteren Dichtungsanordnung (56) erstreckt.

9. Stutzen (14) nach einem beliebigen der vorhergehenden Ansprüche, der eine vordere Dichtungsanordnung (54) um die rohrförmige Umhüllung (20) herum umfasst, wobei der vordere Rand (92) des Einsatzes (58) hinter der vorderen Dichtungsanordnung (50) liegt.

10. Stutzen (14) nach einem beliebigen der vorhergehenden Ansprüche, bei dem die Endabschnitte (34) der Bewehrungselemente (29) in der Aufnahmekammer (52) von hinten nach vorn mit Abstand zu der Längsachse bis zu ihren freien Enden (36) divergieren.

11. Stutzen (14) nach einem beliebigen der vorhergehenden Ansprüche, bei dem das verfestigte Füllmaterial (68) einen hinteren Block (108), der aus einer ersten Materialzusammensetzung gebildet ist und der in Kontakt mit der konvergierenden Innenfläche (88) des Einsatzes (58) angeordnet ist, und einen vorderen Block (106), der aus einer zweiten Materialzusammensetzung gebildet ist, unterschiedlich zu der ersten Materialzusammensetzung, und der vor dem hinteren Block (108) angeordnet ist, aufweist.

12. Stutzen (14) nach einem beliebigen der vorhergehenden Ansprüche, der mindestens ein Befestigungselement (100) des Einsatzes (58) an der Abdeckung (51) umfasst, wobei das Befestigungselement (100) sich radial oder axial in Bezug auf die Längsachse (A-A') erstreckt.

13. Stutzen (14) nach einem beliebigen der Ansprüche 1 bis 11, bei dem der Einsatz (58) geklemmt ist, ohne an der Innenfläche (60) der Abdeckung (51) befestigt zu sein.

14. Flexible Leitung, umfassend:
- eine rohrförmige Umhüllung (20) die mindestens einen Fluidströmungskanal begrenzt;
- mindestens eine Bewehrungsschicht (24, 25), die um die rohrförmige Umhüllung (20) angeordnet ist,
- mindestens einen Stutzen (14) nach einem beliebigen der vorhergehenden Ansprüche, der auf ein Ende der rohrförmige Umhüllung (20) montiert ist.

15. Verfahren zum Montieren eines Verbindungstutzens (14) einer flexiblen Leitung, wobei die flexible Leitung eine rohrförmige Umhüllung (20) und mindestens eine Bewehrungsschicht (24, 25) aufweist, die um die rohrförmige Umhüllung (20) herum angeordnet ist, wobei das Verfahren die folgenden Schritte aufweist:
- Bereitstellen eines Endbereichs (32) der rohrförmige Umhüllung (20), der eine Längsachse (A-A') des Stutzens (14) definiert;
- Einbringen einer Abdeckung (51) um die rohrförmige Umhüllung (20) herum, wobei die Abdeckung (51) eine Innenfläche (60) aufweist, die gegenüber dem Endbereich (32) der rohrförmige Umhüllung (20) angeordnet ist,
- Bilden von Endabschnitten (34) von Bewehrungselementen (24, 25);
- Anordnen eines Endbogenteils (50) an das Ende der rohrförmige Umhüllung (20) und in Kontakt Bringen der Abdeckung (51) mit dem Endbogenteil (50), wobei das Endbogenteil (50), die Innenfläche (60) der Abdeckung (51) und der Endbereich (32) der rohrförmige Umhüllung (20) mindestens eine Aufnahmekammer (52) begrenzen, die die Endabschnitte (34) der Bewehrungselemente (29) aufnimmt, wobei ein Einsatz (58) in der Aufnahmekammer (52) in Kontakt mit der Innenfläche (60) der Abdeckung (51) angeordnet ist;
- Injizieren eines Füllmaterials (68) in die Aufnahmekammer (52), das geeignet ist, sich zu verfestigen und Verfestigen des Füllmaterials (68);
**dadurch gekennzeichnet, dass** der Einsatz (58) eine von vorn nach hinten zur Längsachse (A-A') konvergierende Innenfläche begrenzt, wobei ein hinterer Rand (94) der konvergierenden Innenfläche (88) benachbart zu einem Endabschnitt (34) eines Bewehrungselementes (29) liegt, ein Vorderrand (92) der konvergierenden Innenfläche (88) in Kontakt mit der Innenfläche (60) der Abdeckung (51) fortlaufend zu der Innenfläche (60) der Abdeckung (51) ist, die konvergierende Innenfläche (88) zu jedem Bewehrungselement (29) über mindestens einen Teil der Länge des Bewehrungselementes (29) zwischen dem hinteren Rand (94) und dem vorderen Rand (92) der konvergierenden Innenfläche (88) beabstandet ist,
wobei das verfestigte Füllmaterial (68) in Kontakt mit der konvergierenden Innenfläche (88) zwischen dem hinteren Rand (94) und dem vorderen Rand (92) der konvergierenden Innenfläche (88) ist.

## Claims

1. A connection end piece (14) for a flexible line, the flexible line including a tubular sheath (20) and at least one armor layer (24, 25) arranged around the tubular sheath (20), the end piece (14) including:
- an end part (32) of the tubular sheath (20) defining a longitudinal axis (A-A') of the end piece (14);
- an end arch (50);
- a cover (51), attached to the end arch (50), the cover (51) having an inner surface (60) arranged across from the end part (32) of the tubular sheath (20), the inner surface (60) of the cover (51), the end arch (50) and the end part (32) of the tubular sheath (20) delimiting at least one receiving chamber (52);
- end segments (34) of armor elements (29), placed in the receiving chamber (52);
- a solidified filler material (68), embedding the end segments (34) of the armor elements (29) in the receiving chamber (52);
- an insert (58) arranged in the receiving chamber (52) in contact with the inner surface (60) of the cover (51),
**characterized in that** the insert (58) delimits an inner surface (88) converging from front to back toward the longitudinal axis (A-A'), a rear edge (94) of the converging inner surface (88) being located near an end segment (34) of an armor element (29), a front edge (92) of the converging inner surface (88) being in contact with the inner surface (60) of the cover (51), in continuity with the inner surface (60) of the cover (51), the converging inner surface (88) being located separated from each armor element (29) on at least part of the length of the armor element (29) between the rear edge (94) and the front edge (92) of the converging inner surface (88), the solidified filler material (68) being in contact with the converging inner surface (88) between the rear edge (94) and the front edge (92) of the converging inner surface (88).

2. The end piece (14) according to claim 1, wherein the insert (58) has an outer surface (86) with a shape conjugated with a rear region (64) of the inner surface (60) of the cover (51).

3. The end piece (14) according to claim 2, wherein the rear region (64) of the inner surface (60) of the cover (51) on which the outer surface (86) of the insert (58) bears defines a shoulder (65) for axial retention of the insert (58).

4. The end piece (14) according to any one of claims 2 or 3, wherein the rear region (64) of the inner surface (60) of the cover (51) is cylindrical and coaxial with the longitudinal axis (A-A').

5. The end piece (14) according to any one of the preceding claims, wherein the inner surface (60) of the cover (51) has a front region (62) located in front of the insert (58), the front region (62) converging from front to back toward the longitudinal axis (A-A').

6. The end piece (14) according to claim 5, wherein the converging inner surface (88) is flush with the inner surface (60) of the cover (51) at the front edge (92) of the converging inner surface (88).

7. The end piece (14) according to any one of the preceding claims, comprising a rear sealing assembly (56) around an outer sheath (30) of the flexible line, arranged around the armor elements (29), the rear edge (94) of the insert (58) being located in front of the rear sealing assembly (56).

8. The end piece (14) according to claim 7, wherein the insert (58) extends radially over the entire radial expanse of the rear sealing assembly (56), in front of the rear sealing assembly (56).

9. The end piece (14) according to any one of the preceding claims, comprising a front sealing assembly (54) around the tubular sheath (20), the front edge (92) of the insert (58) being located behind the front sealing assembly (50).

10. The end piece (14) according to any one of the preceding claims, wherein the end segments (34) of the armor elements (29) diverge from back to front away from the longitudinal axis (A-A') up to their free end (36) in the receiving chamber (52).

11. The end piece (14) according to any one of the preceding claims, wherein the solidified filler material (68) includes a rear block (108), formed by a first material composition, the rear block (108) being arranged in contact with the converging inner surface (88) of the insert (58), and a front block (106), formed from a second material composition, different from the first material composition, the front block (106) being arranged in front of the rear block (108).

12. The end piece (14) according to any one of the preceding claims, comprising at least one element (100) for attaching the insert (58) on the cover (51), the attachment element (100) extending radially or axially relative to the longitudinal axis (A-A').

13. The end piece (14) according to any one of claims 1 to 11, wherein the insert (58) is shimmed without being attached on the inner surface (60) of the cover (51).

14. A flexible line, comprising:
- a tubular sheath (20) delimiting at least one fluid circulation passage;
- at least one armor layer (24, 25) arranged outside the tubular sheath (20),
- at least one end piece (14) according to any one of the preceding claims, mounted at one end of the tubular sheath (20).

15. A method for mounting a connection end piece (14) for a flexible line, the flexible line including a tubular sheath (20) delimiting a fluid circulation passage and at least one armor layer (24, 25) arranged around the tubular sheath (20), the method including the following steps:
- providing an end part (32) of the tubular sheath (20) defining a longitudinal axis (A-A') of the end piece (14);
- engaging a cover (51), around the tubular sheath (20), the cover (51) having an inner surface (60) arranged across from the end part (32) of the tubular sheath (20),
- clearing armor element (24, 25) end segments (34);
- placing an end arch (50) at the end of the tubular sheath (20) and brought from the cover (51) into contact with the end arch (50), the end arch (50), the inner surface (60) of the cover (51) and the end part (32) of the tubular sheath (20) delimiting at least one receiving chamber (52) receiving the end segments (34) of the armor elements (29), an insert (58) being arranged in contact with the inner surface (60) of the cover (51) in the receiving chamber (52);
- injecting a filler material able to solidify in the receiving chamber (52) and solidifying the filler material (68);
**characterized in that** the insert (58) delimits an inner surface (88) converging from front to back toward the longitudinal axis (A-A'), a rear edge (94) of the converging inner surface (88) being located near an end segment (34) of an armor element (29), a front edge (92) of the converging inner surface (88) being in contact with the inner surface (60) of the cover (51), in continuity with the inner surface (60) of the cover (51), the converging inner surface (88) being located separated from each armor element (29) on at least part of the length of the armor element (29) between the rear edge (94) and the front edge (92) of the converging inner surface (88),
the solidified filler material (68) being in contact with the converging inner surface (88) between the rear edge (94) and the front edge (92) of the converging inner surface (88).
